# EUROPEAN PATENT APPLICATION

(11) **EP 3 151 138 A1**
(43) Date of publication of application: **05.04.2017**
(21) Application number: 15826302.0
(22) Date of filing: 30.07.2015
(51) Int. Cl.: G06F 17/50, B21D 22/00, B21D 37/20

(54) **MODEL CONFIGURATION METHOD, FORMING SIMULATION METHOD, MANUFACTURING METHOD FOR FORMING TOOL, PROGRAM, COMPUTER READABLE RECORDING MEDIUM WITH PROGRAM STORED THEREIN, AND FINITE ELEMENT MODEL**

(30) Priority: 30.07.2014 JP 2014154742
(71) Applicant: Nippon Steel & Sumitomo Metal Corporation, Tokyo 100-8071 (JP)
(72) Inventor: SUZUKI, Toshiya, Tokyo 100-8071 (JP); NAKAZAWA, Yoshiaki, Tokyo 100-8071 (JP)
(74) Representative: Vossius & Partner Patentanwälte Rechtsanwälte mbB
(86) International application number: PCT/JP2015/071703
(87) International publication number: WO 2016/017775

(57) **Abstract**

[Object] To provide a model setting method of a finite element model used for forming simulation, which is capable of executing forming simulation of a metal plate highly accurately and efficiently.

[Solution] Provided is a model setting method for setting a finite element model for simulating forming of a metal plate by a forming tool by using a finite element method, by a processor included in a computer, the model setting method including: in setting a forming tool model that represents the forming tool, setting at least a part of a metal plate contacting surface that contacts the metal plate, in the forming tool model, as a surface layer that has characteristics of an elastic body or an elasto-plastic body; and setting a part that supports the surface layer in the forming tool model, as a base body that has characteristics of a rigid body.

## Description

### Technical Field

The present invention relates to a model setting method of a finite element model that is used in forming simulation of a metal plate by a finite element method, a forming simulation method that uses a set finite element model, a production method of a forming tool that uses the forming simulation method, a program, a computer-readable recording medium having a program recorded thereon, and a finite element model.

### Background Art

Components that are formed by press forming, roll forming, and the like of a metal plate by means of a forming tool are heavily used in automotive components and home appliances. In these components, forming defects such as cracks and wrinkles, dimensional accuracy failure associated with springback, and the like can occur during a forming process, in some cases. In order to study a method to prevent the above, forming simulation by a finite element method is actively used in recent years.

In general, the forming simulation of a metal plate by the finite element method performs calculation by modeling an analysis target as a shell element, for the purpose of shortening the time taken for creation and analysis of an analysis model, in many cases. On this occasion, the analysis model is simplified by imparting characteristics of a rigid body to the forming tool, and characteristics of a deformable body (elasto-plastic body) to the metal plate.

However, the forming tool is a deformable body (elasto-plastic body) actually, and the forming progresses with elastic deformation (plastic deformation depending on case) of the forming tool during forming the actual metal plate. Hence, there is a problem in that consistency between an analysis result of the forming simulation and an actual measured value of the real formed piece becomes low in the above analysis model. In particular, high strength material is used actively to reduce weights of components and to improve a collision function, and a forming load increases when forming a high strength metal plate, and thus influence by the elastic deformation of the forming tool in the forming simulation is unable to be disregarded. For example, when an increased thickness portion of a thick plate thickness is created in a part of the metal plate during the procedure of forming, the forming tool is an elasto-plastic body, and thus the forming tool actually contacts not only the increased thickness portion of the metal plate but also parts other than the increased thickness portion. However, if the forming tool is assumed as a rigid body to model the forming tool, the forming tool contacts only the increased thickness portion of the metal plate in the model. Thus, it is desired to consider the elastic deformation of the forming tool, in order to improve the accuracy of the forming simulation.

Thus, for example, an analysis model that models the forming tool as a solid element to impart characteristics of an elastic body or an elasto-plastic body is conceived. However, when the forming tool is modeled as the solid element, significant labor and time are necessary in each of creation of the analysis model (mesh division) and analysis execution, as compared with a case of modeling the forming tool as a shell element. Hence, using this analysis model is not realistic at a mass production site that works on development of many components.

Also, Patent Literature 1 and Patent Literature 2 disclose a method that assumes a die as a rigid body to model only a die surface as a shell element, and performs plate forming simulation, and assumes the die as an elastic body to model the die as a solid element, and inputs a node reaction force that is calculated from the above plate forming simulation, and performs die stiffness simulation, and again performs the above plate forming simulation by reflecting die deflection distribution obtained by the above die stiffness simulation.

### Citation List

### Patent Literature

Patent Literature 1: JP 2005-138120A
Patent Literature 2: JP 2005-138119A

### Summary of Invention

### Technical Problem

However, in the method described in the above Patent Literature 1 and Patent Literature 2, the die is modeled as the solid element in the die stiffness simulation, and thus time is taken to create the analysis model. Also, many steps, such as the plate forming simulation and the die stiffness simulation, are necessary to be performed in order to obtain the analysis result, and significant labor and time are still taken in the entire analysis. Further, it is difficult to execute a series of steps in a simple and convenient manner, only with general-purpose finite element method analysis software.

The present invention is made in consideration of the above problem, and a purpose of the present invention is to provide a model setting method of a finite element model, a forming simulation method, a production method of a forming tool, a program, a computer-readable recording medium having a program recorded thereon, and a finite element model, which are capable of executing forming simulation of a metal plate highly accurately and efficiently.

### Solution to Problem

In order to understand the situation in which the forming tool elastically deforms during forming the metal plate, the present inventors have performed forming simulation of the metal plate by the finite element method, with regard to a case in which the forming tool is modeled as the shell element to impart the characteristics of the rigid body, and a case in which the forming tool is modeled as the solid element to impart the characteristics of the elastic body or the elasto-plastic body, and have compared and studied the both cases. As a result, it has been found out that, when the characteristics of the elastic body or the elasto-plastic body is imparted to the finite element model of the forming tool, the entire forming tool is unnecessary to be targeted, but only a surface vicinity that contacts the metal plate of the forming tool may be targeted. As a result of accumulation of intense study based on this knowledge, it has been found out that displacement of the rigid body is controlled while the entire shape of the forming tool is maintained in consideration of the elastic deformation of the forming tool surface, by modeling the forming tool as an imaginary two-layer structure including a surface layer that contacts the metal plate and a base body that supports the surface layer, and imparting the characteristics of the elastic body or the elasto-plastic body to the surface layer, and imparting the characteristics of the rigid body to the base body, and thus the present invention has been created.

That is, according to the present invention, there is provided a model setting method for setting a finite element model for simulating forming of a metal plate by a forming tool by using a finite element method, by a processor included in a computer, the model setting method including: in setting a forming tool model that represents the forming tool, setting at least a part of a metal plate contacting surface that contacts the metal plate, in the forming tool model, as a surface layer that has characteristics of an elastic body or an elasto-plastic body; and setting a part that supports the surface layer in the forming tool model, as a base body that has characteristics of a rigid body.

In the above invention, the surface layer is set to any of a shell element, a thick-walled shell element, and a solid element. Also, the above base body is set to a shell element, a thick-walled shell element, or a solid element.

The forming tool model expressed by the surface layer and the base body is what a region at a vicinity of a surface of the forming tool is modeled along the metal plate contacting surface.

Also, it is desirable that the thickness of the surface layer is set to 0.2 to 5.0 times the base material thickness of the metal plate. Also, the thickness of the surface layer may be set to 1.0 to 10 mm. Note that, here, "the thickness of the surface layer" means the imaginary thickness of the shell element or the thickness of the thick-walled shell element or the solid element. Also, the base material thickness here is the thickness of the metal plate before formed by the forming tool.

Furthermore, a part of the forming tool model at which load concentrates on the forming tool when forming the metal plate may be set as the surface layer.

When a plurality of forming tools are modeled, at least one of forming tool models may be represented by the finite element model that includes the surface layer and the base body.

Furthermore, there is provided a forming simulation method for simulating forming of a metal plate by a forming tool by using a finite element method, the forming simulation method including: a metal plate model setting step for setting a metal plate model representing the metal plate; a forming tool model setting step for setting a forming tool model that represents the forming tool; and an analysis step for simulating forming of the metal plate by the forming tool, by using the metal plate model and the forming tool model. The forming tool model setting step includes a first setting step for setting a first forming tool model by using the above model setting method.

The forming tool model setting step may include a second setting step for setting a second forming tool model that represents the forming tool as a rigid body shell element, first forming simulation that performs analysis by using the metal plate model and the second forming tool model may be performed, whether or not the second forming tool model needs to be changed may be determined on the basis of an increased thickness amount and a forming load of the metal plate obtained by the first forming simulation, and when it is determined that the second forming tool model needs to be changed, second forming simulation that performs analysis by using the first forming tool model may be performed.

According to the present invention, there is provided a production method of a forming tool for designing and producing the forming tool by using the above forming simulation method.

Furthermore, there is provided a program for causing a computer to execute a process that sets a finite element model for simulating forming of a metal plate by a forming tool by using a finite element method, including: in setting a forming tool model that represents the forming tool, setting at least a part of a metal plate contacting surface that contacts the metal plate, in the forming tool model, as a surface layer that has characteristics of an elastic body or an elasto-plastic body; and setting a part that supports the surface layer in the forming tool model, as a base body that has characteristics of a rigid body.

There is provided a computer-readable recording medium having a program recorded thereon, the program being for causing a computer to execute a process for setting a finite element model for simulating forming of a metal plate by a forming tool by using a finite element method, including: in setting a forming tool model that represents the forming tool, setting at least a part of a metal plate contacting surface that contacts the metal plate, in the forming tool model, as a surface layer that has characteristics of an elastic body or an elasto-plastic body; and setting a part that supports the surface layer in the forming tool model, as a base body that has characteristics of a rigid body.

Furthermore, there is provided a finite element model of a forming tool used in simulation of forming a metal plate by the forming tool. At least a part of a surface layer of a metal plate contacting surface of the forming tool is expressed by an elastic body or an elasto-plastic body, and a base body that supports the surface layer is expressed by a rigid body.

The finite element model of the forming tool expressed by the surface layer and the base body is what a region at a vicinity of a surface of the forming tool is modeled along the metal plate contacting surface.

The above surface layer expressed by the elastic body or the elasto-plastic body may be any one of the shell element, the thick-walled shell element, and the solid element. Also, the above base body expressed by the rigid body may be any one of the shell element, the thick-walled shell element, and the solid element.

At least a part of the surface layer may include at least a part of a blank holder of the forming tool. At least a part of the surface layer may include a convex shape portion of the forming tool. Furthermore, at least a part of the surface layer may include a region of the forming tool corresponding to a curved surface of a formed piece, in the finite element model of the forming tool for forming the formed piece that includes the curved surface from the metal plate.

The thickness of the above surface layer may be set to 1.0 to 10 mm. Here, "the thickness of the surface layer" also means the imaginary thickness of the shell element or the thickness of the thick-walled shell element or the solid element.

### Advantageous Effects of Invention

The present invention has the effect of being capable of executing the forming simulation of the metal plate accurately and efficiently.

### Brief Description of Drawings

[FIG. 1] FIG. 1 is a schematic perspective view illustrating an example of a formed piece of a target of a forming simulation method according to an embodiment of the present invention.
[FIG. 2] FIG. 2 is a schematic cross-sectional view illustrating an example of a forming tool of a target of a forming simulation method according to an embodiment of the present invention.
[FIG. 3] FIG. 3 is a schematic cross-sectional view illustrating an example of a forming tool model used in a forming simulation method according to an embodiment of the present invention.
[FIG. 4A] FIG. 4A is a schematic diagram illustrating a finite element model of a forming tool used in a forming simulation method according to an embodiment of the present invention, in which a surface layer is a shell element of an elastic body or an elasto-plastic body, and a base body is a rigid body shell element.
[FIG. 4B] FIG. 4B is a schematic diagram that schematizes a part of FIG. 4A.
[FIG. 5A] FIG. 5A is a schematic diagram illustrating a finite element model of a forming tool used in a forming simulation method according to an embodiment of the present invention, in which a surface layer is a thick-walled shell element of an elastic body or an elasto-plastic body or a solid element of an elastic body or an elasto-plastic body, and a base body is a rigid body shell element.
[FIG. 5B] FIG. 5B is a schematic diagram that schematizes a part of FIG. 5A.
[FIG. 6A] FIG. 6A is a schematic diagram illustrating a finite element model of a forming tool used in a forming simulation method according to an embodiment of the present invention, in which a surface layer is a solid element of an elastic body or an elasto-plastic body, and a base body is a solid element of a rigid body.
[FIG. 6B] FIG. 6B is a schematic diagram that schematizes a part of FIG. 6A.
[FIG. 7A] FIG. 7A is a schematic cross-sectional view illustrating another example of a forming tool model used in a forming simulation method according to an embodiment of the present invention, in which at least a part of the forming tool model is represented by a model composed of a surface layer and a base body.
[FIG. 7B] FIG. 7B is a schematic cross-sectional view illustrating another example of a forming tool model used in a forming simulation method according to an embodiment of the present invention, in which at least one of a plurality of forming tool models is represented by a model composed of a surface layer and a base body.
[FIG. 8A] FIG. 8A is a schematic diagram illustrating a hat member of a saddle shape that includes a curved surface that is curved in a height direction, as an example of a formed piece.
[FIG. 8B] FIG. 8B is a schematic diagram illustrating a hat member of a saddle shape that includes a curved surface that is curved in a width direction, as another example of a formed piece.
[FIG. 9] FIG. 9 is a flowchart illustrating an automatic determination process of a finite element model.
[FIG. 10] FIG. 10 is a schematic perspective view illustrating a finite element model of a forming tool of comparative example 1.
[FIG. 11] FIG. 11 is a schematic perspective view illustrating a finite element model of a forming tool of comparative example 2.
[FIG. 12] FIG. 12 is a contour diagram illustrating strain distribution in a height direction (Z direction) of a forming tool in forming simulation of comparative example 2.
[FIG. 13] FIG. 13 is a schematic perspective view illustrating a finite element model of a forming tool of working example 1.
[FIG. 14] FIG. 14 is a schematic perspective view illustrating a finite element model of a forming tool of working examples 2, 3, and 6.
[FIG. 15] FIG. 15 is a schematic perspective view illustrating a finite element model of a forming tool of working examples 4 and 7.
[FIG. 16] FIG. 16 is a schematic perspective view illustrating a finite element model of a forming tool of working example 5.
[FIG. 17] FIG. 17 is a contour diagram illustrating a surface pressure distribution of a blank holder in forming simulation of comparative examples 1 and 2 and working examples 1 to 3.
[FIG. 18A] FIG. 18A is a plan view illustrating a cross sectional position of a formed piece in forming simulation of comparative examples 1 and 2 and working examples 1 to 3.
[FIG. 18B] FIG. 18B is a cross-sectional view across I-I section line of FIG. 18A.
[FIG. 18C] FIG. 18C is a graph illustrating a twist angle in a cross section of a formed piece in forming simulation of comparative examples 1 and 2 and working examples 1 to 3.

### Description of Embodiments

In the following, a model setting method, a forming simulation method, and a production method of a forming tool according to an embodiment of the present invention will be described in detail. Note that the model setting method and the forming simulation method described below can be provided as a program that can be executed by a computer for executing each process, and for example can be performed by an information processing apparatus that includes a central processing unit (CPU), a read only memory (ROM), and a random access memory (RAM), such as a computer. Also, a computer-readable recording medium storing this program can be provided as well. The recording medium can be a magnetic disk, an optical disc, a magneto-optical disk, a flash memory, or the like, for example. Also, the above program may be delivered via a network for example, without using the recording medium.

### <A. Model Setting Method and Forming Simulation Method>

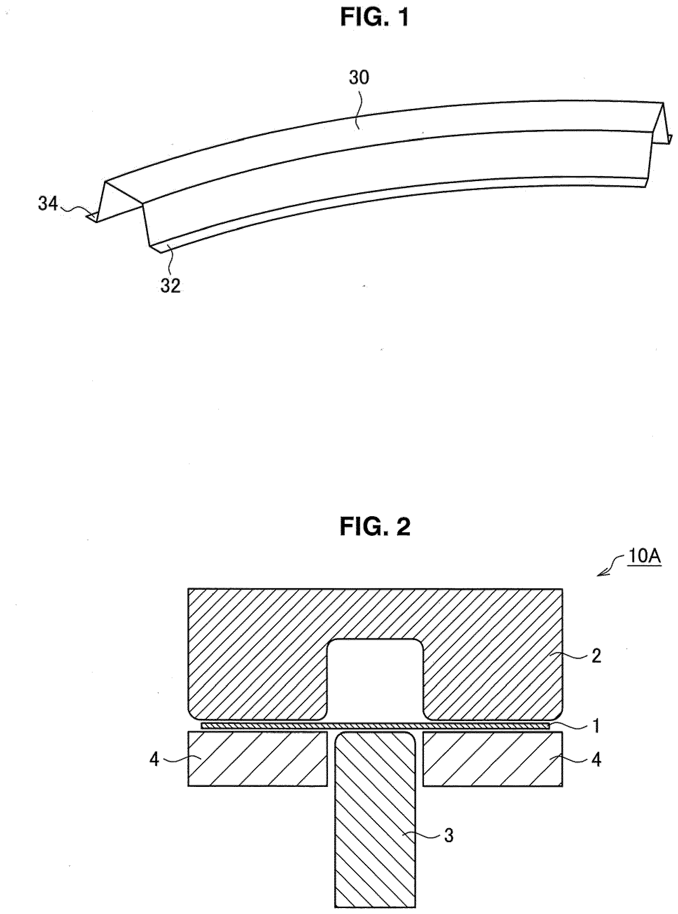

The model setting method according to an embodiment of the present invention is a method to set a finite element model for simulating forming of a metal plate by a forming tool by using a finite element method, by means of a processor that is included in a computer. In setting a forming tool model that represents the forming tool, this model setting method has a feature of setting at least a part of a metal plate contacting surface that contacts a metal plate model representing the metal plate, of the above forming tool model, as a surface layer that has the characteristics of an elastic body or an elasto-plastic body, and setting a part that supports the above surface layer, of the above forming tool model, as a base body that has the characteristics of a rigid body. The forming simulation of the metal plate is performed by using the finite element model that is set by the model setting method. In the following, the model setting method and the forming simulation method according to an embodiment of the present invention will be described with reference to FIGS. 1 to 7B.

FIG. 1 is a schematic perspective view illustrating an example of a formed piece that is obtained by forming a metal plate. The formed piece 30 illustrated in FIG. 1 is a hat member that is obtained by press forming the metal plate. The formed piece 30 (the hat member) illustrated in FIG. 1 is obtained by forming the metal plate by using a forming tool illustrated in FIG. 2, for example. FIG. 2 is a cross-sectional view illustrating an example of the forming tool. The forming tool 10A illustrated in FIG. 2 is a press forming die, and includes a die 2, a punch 3, and a blank holder 4. The formed piece 30 (the hat member) illustrated in FIG. 1 is obtained by holding a metal plate 1 with the die 2 and the blank holder 4 by using the forming tool 10A illustrated in FIG. 2, and pressing the held metal plate 1 with the punch 3, for example.

The forming simulation method according to the present embodiment is a method for simulating the forming of the metal plate by means of the forming tool illustrated in FIG. 2, and its simulation result can be utilized in designing the forming tool or the like. The model that represents the forming tool, among the finite element model that is utilized in the forming simulation, is set by the model setting method according to the present embodiment.

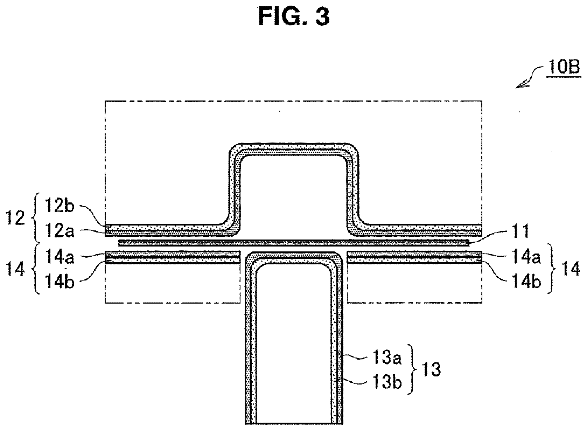

FIG. 3 is an example of the forming tool model set by the model setting method according to the present embodiment, and is a schematic cross-sectional view illustrating the model of the forming tool illustrated in FIG. 2. In the forming tool model 10B illustrated in FIG. 3, the die model 12, the punch model 13, and the blank holder model 14 are each modeled as an imaginary two-layer structure including a surface layer and a base body. The die model 12 includes a surface layer 12a that contacts a metal plate model 11 and a base body 12b that supports the surface layer 12a. The punch model 13 includes a surface layer 13a that contacts the metal plate model 11 and a base body 13b that supports the surface layer 13a. The blank holder model 14 includes a surface layer 14a that contacts the metal plate model 11 and a base body 14b that supports the surface layer 14a. The surface layers 12a, 13a, 14a have the characteristics of the elastic body or the elasto-plastic body, and the base bodies 12b, 13b, 14b have the characteristics of the rigid body. Note that, in FIG. 3, for convenience of explanation, the base bodies 12b, 13b, 14b have thicknesses, but need not have the thicknesses necessarily.

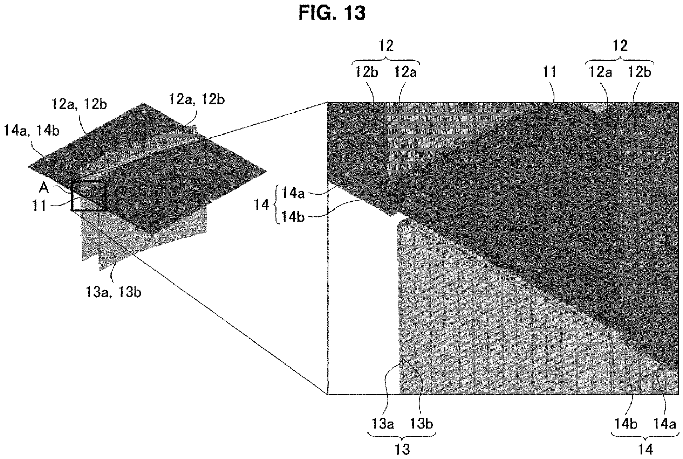

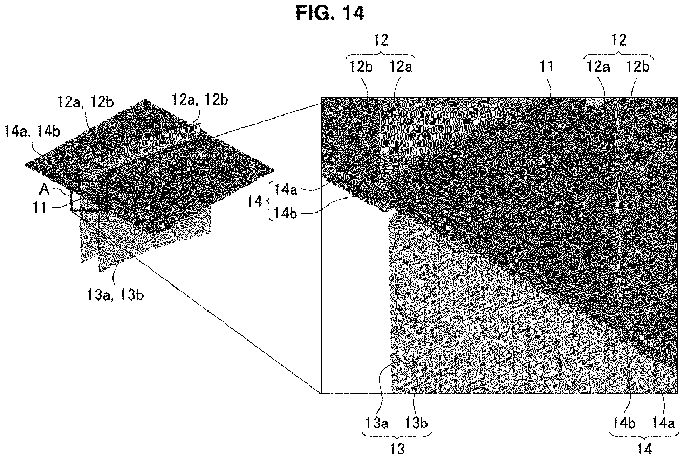

The later described FIGS. 13 and 14 illustrate one exemplary configuration of the finite element model of the forming tool model illustrated in FIG. 3. In the finite element model of the forming tool illustrated in a partially enlarged view of a region A of FIG. 13, the surface layers 12a, 13a, 14a are modeled as shell elements of elastic bodies or elasto-plastic bodies, and the base bodies 12b, 13b, 14b are modeled as shell elements of rigid bodies. Also, the metal plate model 11 is modeled as a shell element. Note that one forming tool is expressed by paired surface layer and base body. For example, the die is expressed by the paired surface layer 12a and base body 12b. Thus, in order to express the die, which is one forming tool, by the surface layer 12a and the base body 12b, a predetermined constraint condition is set between the surface layer 12a and the base body 12b in the forming simulation, so as to express that the base body 12b supports the surface layer 12a and undergoes rigid body displacement integrally with the surface layer 12a. Also, the constraint condition is set in the same way between the surface layer 13a and the base body 13b, and between the surface layer 14a and the base body 14b. As the constraint condition here, a rigid body constraint condition may be set between the surface layer and the base body, or the element representing the surface layer and the element representing the base body in the finite element model may be integrated by sharing at least a part of nodes constituting each element, between the element representing the surface layer and the element representing the base body in the finite element model, for example.

Also, in the finite element model of the forming tool illustrated in the partially enlarged view of the region A of FIG. 14, the surface layers 12a, 13a, 14a are modeled as the thick-walled shell elements or the solid elements of the elastic bodies or the elasto-plastic bodies, and the base bodies 12b, 13b, 14b are modeled as the shell elements of the rigid bodies. Also, the metal plate model 11 is modeled as the shell element. Note that, in the same way as the above, in the forming simulation, the constraint condition is set between the surface layer 12a and the base body 12b, between the surface layer 13a and the base body 13b, and between the surface layer 14a and the base body 14b. Also, in FIG. 14, the base body 14b of the blank holder model 14 is hidden by the surface layer 14a and thus is not depicted on display.

In the model setting method according to the present embodiment, the forming tool is modeled as the imaginary two-layer structure including the surface layer that contacts the metal plate and the base body that supports the surface layer, and the characteristics of the elastic body or the elasto-plastic body are imparted to the surface layer, and the characteristics of the rigid body are imparted to the base body. Thereby, the rigid body displacement can be controlled while maintaining the entire shape of the forming tool, in consideration of the elastic deformation of the surface that contacts the metal plate of the forming tool. Thus, the accuracy of the forming simulation can be improved.

Here, the base body has the characteristics of the rigid body, and thus normally can be set as the shell element. Also, the surface layer is set to at least a part of the metal plate contacting surface that contacts the metal plate of the forming tool, and is set to only a region at the vicinity of the surface. Note that the metal plate contacting surface means the entire surface that contacts the metal plate model representing the metal plate of the forming tool model. Also, the region at the vicinity of the surface of the forming tool means a region to a predetermined thickness toward a tool inner portion from the surface of the forming tool. Thus, even if the surface layer is modeled as the solid element, the creation time of the finite element model of the forming tool can be shortened, as compared with a case in which the entire forming tool is modeled as the solid element. Also, the characteristics of the elastic body or the elasto-plastic body are imparted to the surface layer, but the forming simulation can be performed in a shorter time, as compared with a case in which the entire forming tool is modeled as the solid element of the elastic body or the elasto-plastic body. Thus, the forming simulation of the metal plate can be performed highly accurately and efficiently.

In the following, the model setting method and the forming simulation method according to the present embodiment will be described in detail.

### [1. Finite Element Model of Forming Tool]

The finite element model of the forming tool according to the embodiment of the present invention is a model in which at least a part of the surface layer of the metal plate contacting surface of the forming tool is expressed by the elastic body or the elasto-plastic body, and the base body that supports the surface layer is expressed by the rigid body. The finite element model of one forming tool is configured by combining the surface layer and the base body.

In the finite element model, the surface layer may be any of the shell element, the thick-walled shell element, and the solid element, and is preferably the shell element particularly. This is because the creation time of the finite element model of the forming tool can be shortened. Also, when the surface layer is the solid element or the thick-walled shell element, the number of divisions in the thickness direction is selected as appropriate according to the later described thickness of the surface layer or the like. The number of divisions in the thickness direction of the solid element or the thick-walled shell element is preferably as small as possible, and for example is preferably approximately 1 to 2 divisions. This is because the creation time and the analysis time of the finite element model of the forming tool can be shortened.

The surface layer is set with a thickness. The thickness of the surface layer is set as appropriate according to the material, the plate thickness, and the size of the metal plate, and the material and the forming load of the forming tool, and the like. For example, the thickness of the surface layer may be decided in advance, by modeling the forming tool as the solid element of the elastic body or the elasto-plastic body and performing the forming simulation. Specifically, it may be such that the forming simulation is performed by modeling the forming tool as the solid element of the elastic body or the elasto-plastic body, and the strain distribution in the thickness direction at the vicinity of the surface of the forming tool is analyzed, and the thickness at which strain can be generated is set to the thickness of the surface layer.

Also, the general shell element is formulated by assuming the perpendicular stress in the plate thickness direction as being always zero, and is unable to express balance of the stress. However, in recent years, the shell element that can consider the stress in the plate thickness direction is proposed, and can improve the analysis accuracy for the processing in which the compressive deformation is given in the plate thickness direction, by the use of this shell element. This shell element that can consider the stress in the plate thickness direction can also be used for the surface layer of the finite element model in the model setting method according to the present embodiment.

On the other hand, in the finite element model, the base body is normally set as the shell element, in order to shorten the creation time of the finite element model of the forming tool. However, the present invention is not limited to this example, and the base body may be set as the solid element or the thick-walled shell element divided once in the thickness direction, for example. Note that the base body can be set as the above shell element that can consider the stress in the plate thickness direction, but the feature of this shell element is unable to be exploited due to the imparted characteristics of the rigid body, and thus the shell element that can consider the stress in the plate thickness direction to the base body is needless to be used.

The above finite element model of the forming tool expressed by setting the surface layer and the base body models the region at the vicinity of the surface of the forming tool along the metal plate contacting surface. The finite element model of the forming tool expressed by the surface layer and the base body according to the present embodiment does not model the entire forming tool, but models only the region at the vicinity of the surface of the forming tool, as illustrated in FIG. 3 for example. Thereby, the setting of the finite element model can be made simple and convenient, and the model of a higher accuracy than the model expressed as the rigid body shell element of the past can be set, and thus the forming simulation of the metal plate can be executed accurately and efficiently.

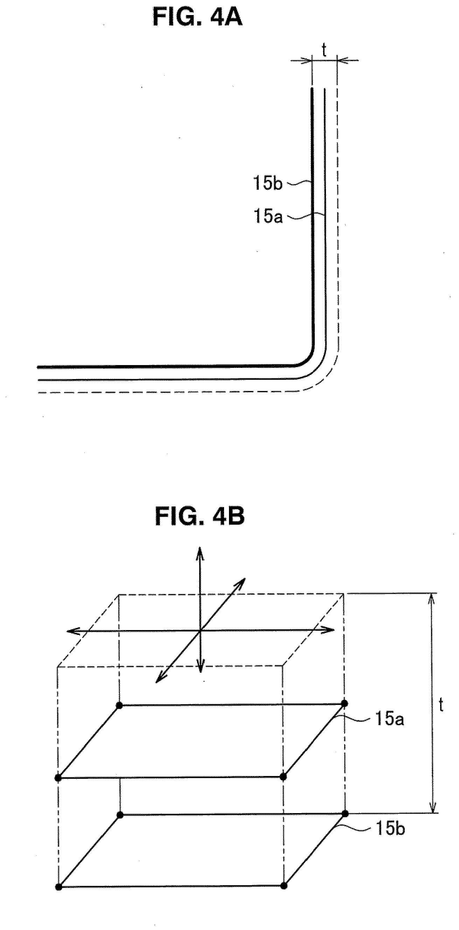

Specifically, for example, when the finite element model of the forming tool in which the surface layer is the shell element and the base body is the shell element is created, the shell element of an imaginary thickness t is located as the surface layer 15a, and the shell element of an imaginary thickness zero is located as the base body 15b in contact with the surface layer 15a for example, as illustrated in FIGS. 4A and 4B. In this case, the surface layer 15a which is the shell element is assumed to be located at the thickness direction center of the imaginary thickness t from a dashed line position representing the surface of the forming tool to the base body 15b, for example. Note that the base body 15b has the imaginary thickness zero, but is represented by a thick line in FIG. 4A. One shell element is represented as a surface that is formed by linking four nodes for example, as illustrated in FIG. 4B. Note that, here, the imaginary thickness of the base body 15b is set to zero, but the present invention is not limited thereto, and the imaginary thickness of the base body 15b can be set to a predetermined thickness.

Note that, when the surface layer is set as the shell element, and the base body is set as the shell element, the nodes that configure the shell element of the surface layer and the nodes that configure the shell element of the base body may be shared to form an integrated model, in order to shorten the building time and the analysis time of the analysis model. In this case, the characteristics of the elastic body or the elasto-plastic body are imparted to the shell element that represents the surface layer 15a, and the characteristics of the rigid body are imparted to the shell element that represents the base body 15b. The constraint condition between the surface layer and the base body is satisfied, by the integration of the surface layer and the base body. In this case, the surface layer 15a and the base body 15b overlap each other, in contrast to the case illustrated in FIGS. 4A and 4B. Also, even when different models are created for the surface layer and the base body without shared nodes, the finite element model that is used in the forming simulation according to the embodiment of the present invention can be set if a predetermined constraint condition such as the rigid body constraint is set between the surface layer 15a and the base body 15b for example.

The imaginary surface that contacts the metal plate of the shell element of the elastic body or the elasto-plastic body that represents the surface layer 15a deforms by receiving the load that is exerted on the imaginary surface of the surface layer 15a. On the other hand, the shell element of the rigid body that represents the base body 15b does not undergo deformation other than the rigid body displacement. Note that, in FIGS. 4A and 4B, the region at the vicinity of the surface to which the surface layer and the base body are set is a region along the metal plate contacting surface, of thickness t from the metal plate contacting surface.

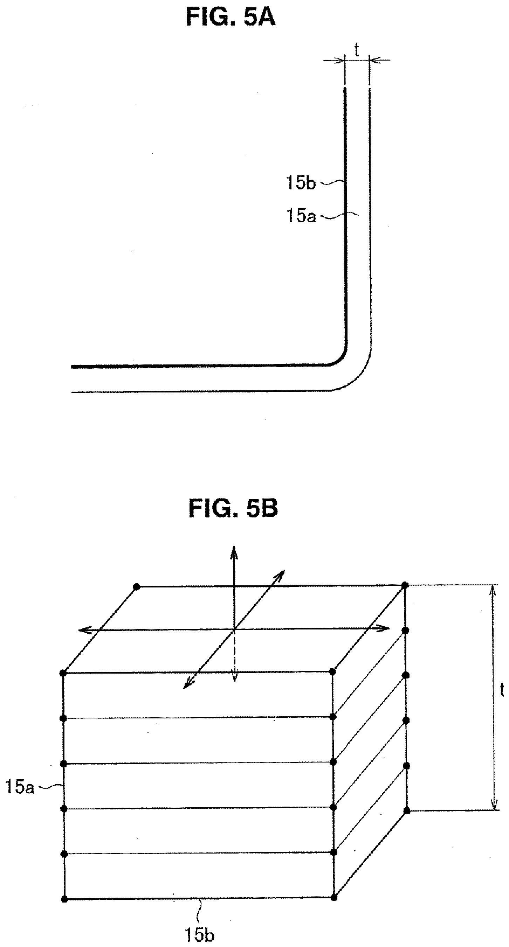

Also, for example, when the finite element model of the forming tool in which the surface layer is the solid element and the base body is the shell element is created, the solid element of the thickness t is located as the surface layer 15a, and the shell element of the imaginary thickness zero is located as the base body 15b in contact with the surface layer 15a, as illustrated in FIGS. 5A and 5B. In FIGS. 5A and 5B as well, the base body 15b has the imaginary thickness zero, but is represented by a thick line. One solid element is represented as a three-dimensional body formed by linking eight nodes for example, as illustrated in FIG. 5B. The surface layer 15a of the solid element may be divided once in the thickness direction, and may be built by dividing into a plurality of pieces in the thickness direction as illustrated in FIG. 5B. Note that, as described above, the time taken for the model building and the simulation generally becomes longer as the number of divisions increases. Note that, in FIGS. 5A and 5B as well, the region at the vicinity of the surface to which the surface layer and the base body are set is a region along the metal plate contacting surface, of the thickness t from the metal plate contacting surface. Note that, here, the thickness of the base body 15b is set to zero, but the present invention is not limited thereto, and the thickness of the base body 15b can be set to a predetermined thickness.

When the surface layer is set as the solid element, and the base body is set as the shell element, the nodes of the surface of the solid element opposite to the base body in the solid element of the surface layer and the nodes of the shell element of the base body may be shared to form an integrated model, in order to shorten the building time and the analysis time of the analysis model. In this case, the characteristics of the elastic body or the elasto-plastic body are imparted to the solid element that represents the surface layer 15a, and the characteristics of the rigid body are imparted to the shell element that represents the base body 15b. In this case, the constraint condition between the surface layer and the base body is satisfied by the integration of the solid element of the surface layer and the shell element of the base body. Also, even when different models are created for the surface layer represented by the solid element and the base body represented by the shell element without shared nodes, the finite element model that is used in the forming simulation according to the embodiment of the present invention can be set, if a predetermined constraint condition such as the rigid body constraint is set between the surface layer 15a and the base body 15b for example. Also, the same applies to when the surface layer is set as the thick-walled shell element. When the surface layer 15a is represented by the solid element of the elastic body or the elasto-plastic body, the solid element of the elastic body or the elasto-plastic body that represents the surface layer 15a deforms by receiving the load that is exerted on the surface of the surface layer 15a. On the other hand, the shell element of the rigid body that represents the base body 15b does not undergo deformation other than the rigid body displacement.

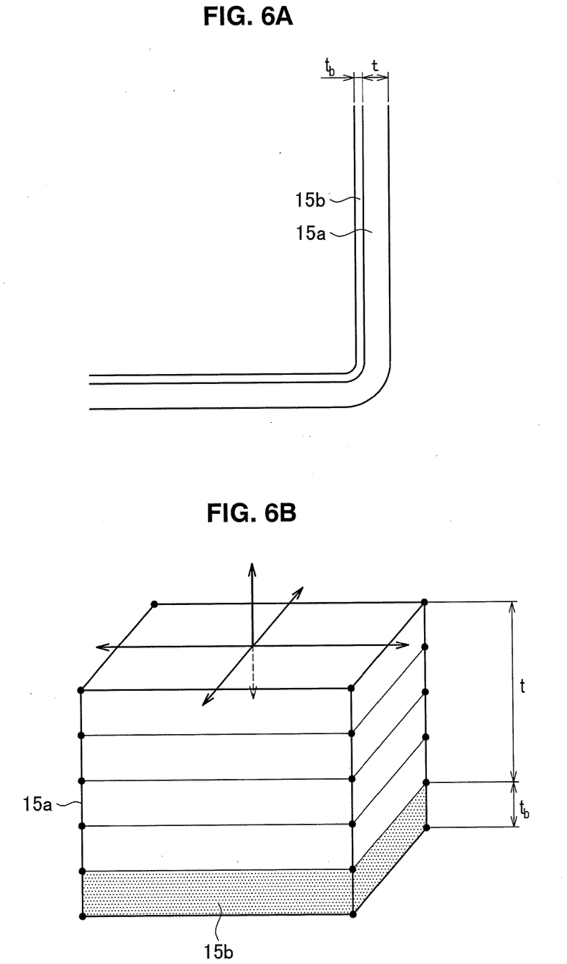

Also, for example, when the finite element model of the forming tool in which the surface layer is the solid element and the base body is the solid element is created, the solid element of the thickness t is located as the surface layer 15a, and the solid element of the thickness tb is located as the base body 15b in contact with the surface layer 15a, as illustrated in FIGS. 6A and 6B. In this case as well, the surface layer 15a of the solid element may be divided once in the thickness direction, and may be built by dividing into a plurality of pieces in the thickness direction as illustrated in FIG. 6B. Also, the base body 15b of the solid element may be divided into a plurality of pieces in the thickness direction, but one division is sufficient to impart the characteristics of the rigid body.

Note that, when the surface layer is set as the solid element, and the base body is set as the solid element, it may be such that the region at the vicinity of the surface that contacts the metal plate of the forming tool is modeled as the solid elements that are divided into at least two pieces or more in the thickness direction as illustrated in FIG. 6B for example, and the characteristics of the elastic body or the elasto-plastic body are imparted to the solid element that is divided into at least one piece or more and is positioned at the metal plate contacting surface side as the surface layer 15a, and the characteristics of the rigid body are imparted to the remaining solid elements that are positioned at the opposite side to the metal plate contacting surface side as the base body 15b, in order to shorten the building time and the analysis time of the analysis model.

On this occasion, the solid element that functions as the surface layer 15a and the solid element that functions as the base body 15b are configured as a contiguous integrated finite element model. Here, the integrated finite element model is a contiguous model formed integrally by sharing the opposite surfaces and nodes by each other, with regard to the solid elements of the surface layer 15a and the base body 15b that are opposite to each other. The constraint condition between the surface layer 15a and the base body 15b is satisfied, by the integration of the solid element of the surface layer 15a and the solid element of the base body 15b. In this case as well, it is sufficient if the base body 15b is divided once in the thickness direction, in order to impart the characteristics of the rigid body to the base body 15b, as described above.

Also, even when different models are created for the surface layer 15a and the base body 15b represented by the solid elements without shared nodes, the finite element model that is used in the forming simulation according to the embodiment of the present invention can be set, if a predetermined constraint condition such as the rigid body constraint is set between the surface layer 15a and the base body 15b, for example. When the surface layer 15a is represented by the solid element of the elastic body or the elasto-plastic body, and the base body 15b is represented by the solid element of the rigid body, the solid element of the elastic body or the elasto-plastic body that represents the surface layer 15a deforms by receiving the load that is exerted on the surface of the surface layer 15a. On the other hand, the solid element of the rigid body that represents the base body 15b does not undergo deformation other than the rigid body displacement. Note that, in FIGS. 6A and 6B, the region at the vicinity of the surface to which the surface layer and the base body are set is a region along the metal plate contacting surface, of thickness t+tb from the metal plate contacting surface.

In modeling the forming tool, the thickness t of the surface layer 15a is preferably set to approximately 0.2 to 5.0 times the base material thickness of the metal plate. When the thickness t of the surface layer 15a is thinner than 0.2 times the base material thickness of the metal plate, local deformation of the die surface resulting from the increased thickness portion is unable to be considered sufficiently, when performing the analysis. On the other hand, when the thickness t of the surface layer 15a is thicker than 5.0 times the base material thickness of the metal plate, it sometimes becomes difficult to model the surface layer and the base body as an element group that is smoothly contiguous in the in-plane direction, in a convex shape portion such as a ridge line rounded portion of the forming tool, and the analysis time sometimes becomes longer as the number of elements increases. Note that, here, the base material thickness is the thickness of the metal plate before formed by the forming tool. For example, the thickness t of the surface layer 15a is set to 1.0 to 10 mm. As described above, when the thickness t of the surface layer 15a is set thinner than 1.0 mm, the local deformation of the die surface resulting from the increased thickness portion is unable to be considered sufficiently, when performing the analysis. Also, when the thickness t of the surface layer 15a becomes greater than 10 mm, it sometimes becomes difficult to model the surface layer and the base body as the element group that is smoothly contiguous in the in-plane direction in the convex shape portion such as the ridge line rounded portion of the forming tool, and the analysis time sometimes becomes longer as the number of elements increases. Note that, when the surface layer 15a is the shell element, "the thickness t of the surface layer 15a" here indicates the imaginary thickness t of the surface layer 15a.

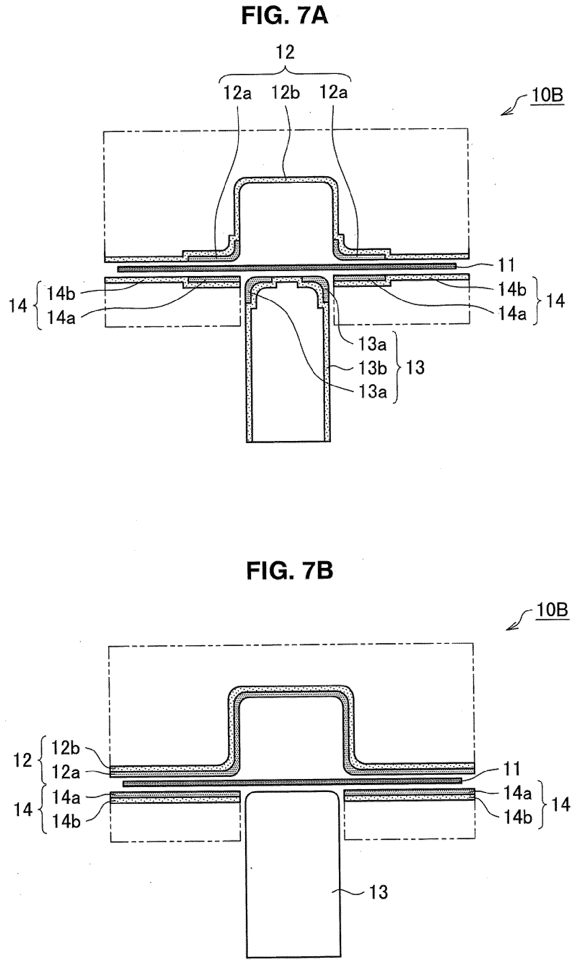

Also, the finite element model of the forming tool used in the forming simulation according to the present embodiment may include the surface layer in at least a part of the metal plate contacting surface of the model. For example, as illustrated in FIG. 3, all of the parts that contact the metal plate model 11 of the forming tool model 10B may be set as surface layers 12a, 13a, 14a. Alternatively, a part of the parts that contact the metal plate model 11 of the forming tool model 10B may be set as the surface layers 12a, 13a, 14a, as illustrated in FIGS. 7A and 7B for example.

More specifically, when a part of the parts that contact the metal plate of the forming tool is modeled as a two-layer structure, a local part of the parts that contact the metal plate model 11 of the forming tool model 10B may be set as the surface layers 12a, 13a, 14a, as illustrated in FIG. 7A. When a part among the parts that contact the metal plate of the forming tool is modeled as the two-layer structure, it is preferable to set the part at which forming load, surface pressure, and the like are concentrated during forming, as the two-layer structure. This is because the forming simulation can be accurately performed in consideration of the elastic deformation of the forming tool during forming the metal plate. For example, in the drawing forming, the forming load, the surface pressure, and the like are concentrated at the rounded portion of the die and the punch and at the inside of the blank holder, in many cases. Thereby, in the example illustrated in FIG. 7A, the two-layer structure has the surface layer 12a at the rounded portion of the die model 12 and its vicinity, the surface layer 13a at the rounded portion of the punch model 13 and its vicinity, and the surface layer 14a at the inside of the blank holder model 14.

Also, for example, when the forming tool includes a plurality of forming tools, at least one forming tool among the forming tools may be modeled as the two-layer structure including the surface layer and the base body, as illustrated in FIG. 7B. In the example illustrated in FIG. 7B, only the die model 12 and the blank holder model 14, among the die model 12, the punch model 13, and the blank holder model 14, are modeled as the two-layer structures including the surface layers 12a, 14a and the base bodies 12b, 14b. For example, when the hat member that has the curve shape illustrated in FIG. 1 is formed, the influence of the elastic deformation of the die and the blank holder becomes larger, in some cases. In the forming simulation of this formed piece, the die model 12 and the blank holder model 14 are preferably set as the two-layer structures including the surface layers 12a, 14a and the base bodies 12b, 14b, as illustrated in FIG. 7B. Note that, in FIG. 7B, the die model 12 and the blank holder model 14 are set as the two-layer structures including the surface layers 12a, 14a and the base bodies 12b, 14b, but at least one of the die model 12 and the blank holder model 14 may be set as the two-layer structure.

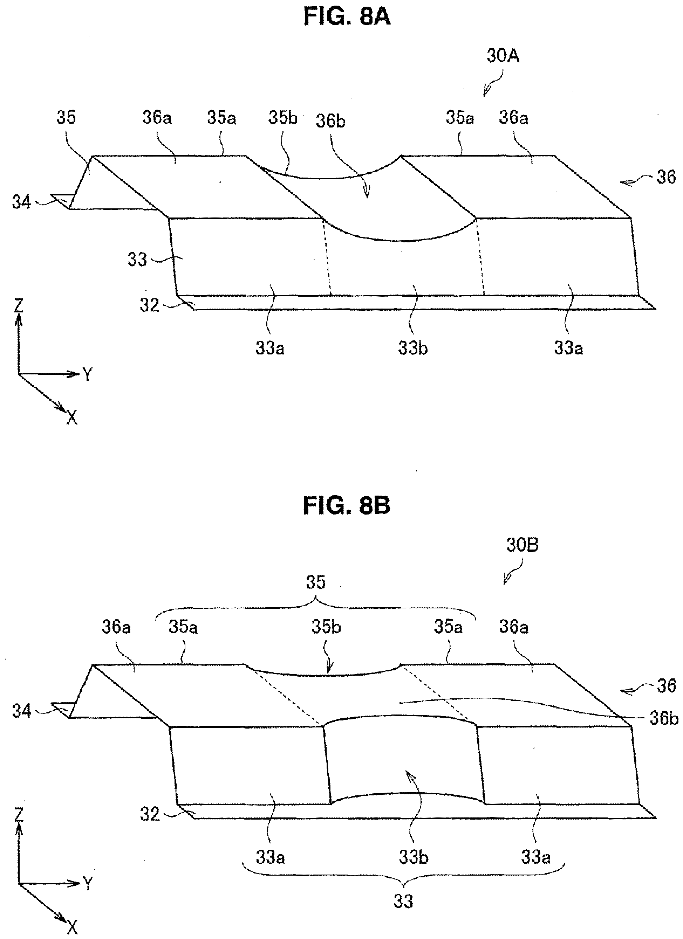

Also, the example of the die model 12 and the blank holder model 14 is taken in FIG. 7B, but the present invention is not limited to this example, and the forming tool that is set as the model of the two-layer structure composed of the surface layer and the base body may be selected as appropriate according to member shape, base material thickness, base material strength, or the like, for example. For example, a case is considered in which the metal plate is press-formed by using the forming tool to obtain hat members 30A, 30B made of flanges 32, 34, a top panel surface 36, and side wall surfaces 33, 35 that couple the flanges 32, 34 and the top panel surface 36, as illustrated in FIG. 8A or FIG. 8B. As illustrated in FIG. 8A, when the top panel surface 36 of the hat member 30A has a saddle shape that includes flat surfaces 36a and a curved surface 36b that curves in a concave shape in the height direction (Z direction), in the longitudinal direction (Y direction), the increased thickness portion is easily generated at the curved surface 36b of the top panel surface 36 or the side wall surfaces 33b, 35b that are contiguous to the curved surface 36b. Thus, the die model 12 and the punch model 13 of the two-layer structure may be set by setting at least the region corresponding to the curved surface 36b that is depressed in the concave shape in the height direction of the hat member 30A and the side wall surfaces 33b, 35b that are contiguous to the curved surface 36b, of the punch model 13, and the region corresponding to the curved surface 36b and the side wall surfaces 33b, 35b of the hat member 30A, of the die model 12, as the surface layers 12a, 13a, and setting the part that supports the surface layers 12a, 13a as the base bodies 12b, 13b. Note that, any one of the die model 12 and the punch model 13 may be set as the finite element model of the two-layer structure that is represented by the surface layer and the base body.

Also, when the side wall surfaces 33, 35 of the hat member 30B have saddle shapes that include the flat surfaces 33a, 35a and the curved surfaces 33b, 35b that curve in concave shapes toward the width direction (X direction) inner portion, in the longitudinal direction (Y direction), as illustrated in FIG. 8B for example, the increased thickness portion is easily generated at the curved surfaces 33b, 35b of the side wall surface 33 or the top panel surface 36b that is contiguous to the curved surfaces 33b, 35b. In this case as well, the finite element model of the forming tool of the two-layer structure may be set by setting at least the region corresponding to the curved surfaces 33b, 35b of the side wall surfaces 33, 35 and the top panel surface 36b that is contiguous to the curved surfaces 33b, 35b in the forming tool as the surface layer, and setting the part that supports the surface layer as the base body.

The type of the forming tool is selected as appropriate according to the forming method of the metal plate. The forming simulation method according to the present embodiment can be applied to press forming such as drawing forming and bending forming, roll forming, or the like, as described later, and the forming tool is a die, a roll, or the like, for example. The structure of the forming tool is the same as that of a general forming tool. In particular, the present invention is preferable when the strength and the elastic modulus of the forming tool are low comparatively. When casting and zinc alloy are used as the forming tool for example, the strength and the elastic modulus are comparatively low, and thus the influence of the elastic deformation, and plastic deformation depending on cases, of the forming tool at the time of forming the metal plate becomes larger. In this case, the present invention that can perform the forming simulation accurately is useful.

### [2. Forming Simulation]

In the present embodiment, the forming simulation of the metal plate by the finite element method is performed by using the finite element model of the forming tool set by the above model setting method. General-purpose finite element method analysis software is used in the forming simulation. Also, the paired surface layer and base body in combination express one forming tool in the finite element model of the forming tool, and thus the base body and the surface layer are combined by setting the constraint condition between the base body and the surface layer in such a manner that the base body supports the surface layer and performs rigid body displacement integrally with the surface layer.

The forming method of the metal plate is press forming such as drawing forming and bending forming, roll forming, or the like, for example. In particular, the present invention is preferable in the case of the press forming, particularly the drawing forming. Forming is performed while wrinkle suppressing pressure is loaded on the metal plate by the die and the blank holder in the drawing forming, and thus the forming load, the surface pressure, and the like are likely to become greater, and the influence of the elastic deformation of the forming tool at the time of forming the metal plate becomes greater. The forming simulation can be performed accurately, by using the forming simulation method according to the present embodiment, in the drawing forming as well.

The forming simulation method of the metal plate according to the embodiment of the present invention can be applied to any shape, without limiting a formed piece of a target of the forming simulation particularly, and is preferably applied to a formed piece in which the plate thickness is increased and decreased partially along with the progress of forming. This formed piece is a hat member that has a curve shape of the width direction or the height direction, in the longitudinal direction, with regard to a formed piece that has a hat shape cross section, for example. In the hat member that has the curve shape of the width direction in the longitudinal direction as illustrated in FIG. 1 for example, the flange 32 at the inside of the curve becomes a stretch flange that is subjected to tensile deformation in the longitudinal direction along with the progress of forming. On the other hand, the flange 34 at the outside of the curve becomes a shrink flange that is subjected to compressive deformation in the longitudinal direction. The plate thickness decreases in the stretch flange, and the plate thickness increases in the shrink flange. As described above, if the surface pressure distribution occurs when the plate thickness is changed partially, the influence of the elastic deformation of the forming tool at the time of forming the metal plate becomes larger. Thus, the forming simulation can be performed accurately, by using the forming simulation method according to the present embodiment, also in the formed piece in which the plate thickness is changed partially.

### [3. Automatic Determination of Finite Element Model]

As described above, the finite element model of the forming tool that is used in the forming simulation method according to the present embodiment includes the surface layer that contacts the metal plate and has the characteristics of the elastic body or the elasto-plastic body, and the base body that supports the above surface layer and has the characteristics of the rigid body. Thereby, the forming simulation of the metal plate can be executed highly accurately and efficiently. On the other hand, the finite element model that is used in the forming simulation is desirably an optimal model in consideration of accuracy that the forming simulation result is to have, the creation time and the calculation time of the finite element model of the forming tool, and the like.

For example, if the accuracy of the simulation result is within an allowable range when the forming tool is modeled as the rigid body shell element, the simulation result can be obtained in a short time, and thus the model may be used. However, in spite of a short calculation time, if the accuracy of the simulation result when using the finite element model that builds the forming tool as the rigid body shell element is outside the allowable range, the finite element model needs to be built so as to allow more highly accurate analysis. Thus, the finite element model of the forming tool to be used may be determined automatically, as in the following example.

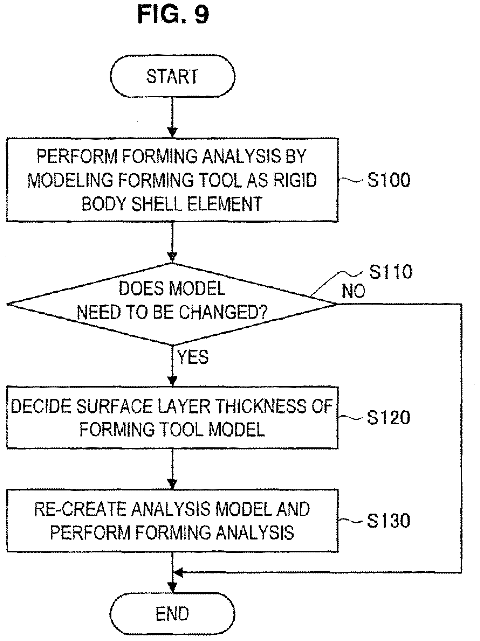

FIG. 9 illustrates an example of an automatic building process of the finite element model. In the automatic building process of the finite element model, the forming tool is first modeled as the rigid body shell element, and the forming simulation is performed (S100: first forming simulation). The finite element model of the forming tool that is used in step S100 is what is utilized from the past, and is easy to build, and reduces the calculation load of the simulation. However, the elastic deformation (or the plastic deformation) of the forming tool occurs in the forming of the actual metal plate, and thus, when the forming tool is modeled as the rigid body shell element, the difference between the simulation result and the actual measured value becomes larger, and it is possible that expected accuracy is unable to be obtained.

Thus, it is determined whether or not the accuracy that is expected from the finite element model of the forming tool built in step S100 is obtained, and it is determined whether the change of the model is necessary or not (S110). The determination of step S110 may be performed by comparing an evaluation index calculated on the basis of the increased thickness amount and the forming load obtained in step S100 for example, with an evaluation threshold value that is set in advance for the base material strength and the formed piece size. The evaluation index may be a value obtained by multiplying the increased thickness amount and the forming load, for example.

If it is determined that the finite element model that is built in step S100 is needless to be changed in step S110 (for example, if the evaluation index is equal to or smaller than the evaluation threshold value), the forming simulation is decided to be performed by using the finite element model that is built in step S100. On the other hand, if it is determined that the finite element model that is built in step S100 needs to be changed (for example, if the evaluation index exceeds the evaluation threshold value), the finite element model is rebuilt on the basis of the model setting method according to the present embodiment.

In the model setting method according to the present embodiment, the forming tool is set as the finite element model made of the surface layer and the base body. Thus, the thickness of the surface layer of the finite element model of the forming tool is decided first (S120). The thickness of the surface layer may be decided on the basis of the increased thickness amount obtained in step S100 and die size requirement, for example. Then, the finite element model of the forming tool is rebuilt with the thickness of the surface layer that is decided in step S120, and the forming simulation is performed (S130: second forming simulation).

As described above, selection work load of the finite element model can be reduced, by evaluating the accuracy of the finite element model of the forming tool and automatically deciding the finite element model that is used in the forming simulation.

### <B. Production Method of Forming Tool>

The production method of the forming tool according to the embodiment of the present invention is a method that designs and produces the forming tool by using above forming simulation method.

In the above forming simulation method, the forming simulation of the metal plate can be performed accurately. Hence, a state that is close to a state in which the metal plate is formed by using the forming tool actually can be reproduced. Thus, amount of work, lead time, and cost of forming tool production can be reduced by using the above forming simulation method.

In the present embodiment, forming defects such as cracks and wrinkles associated with the forming of the metal plate, dimensional accuracy failure resulting from springback at the time of demolding from the die after forming, and the like are analyzed in the forming simulation method for example, and the forming tool can be designed and produced on the basis of the analysis result. Specifically, the shape or the like of the forming tool can be designed and produced, so as not to generate the cracks and the wrinkles and so as to reduce the springback, on the basis of the analysis result.

The type of the forming tool is selected as appropriate according to the forming method of the metal plate as described above, and for example is a die, a roll, or the like used in the press forming such as the drawing forming and the bending forming, the roll forming, or the like. The structures of these forming tools are the same as that of a general forming tool.

The preferred embodiment(s) of the present invention has/have been described above with reference to the accompanying drawings, whilst the present invention is not limited to the above examples. A person skilled in the art may find various alterations and modifications within the scope of the appended claims, and it should be understood that they will naturally come under the technical scope of the present invention.

### [Examples]

In the following, the present invention will be described specifically, taking examples. In the present examples, the hat member illustrated in FIG. 1 is the formed piece. In the cross-sectional shape of the hat member which is this formed piece, the width of the punch (the horizontal direction distance between both side walls) is 80 mm, and the height (the vertical direction distance between the top panel surface and the flange surface) is 60 mm. Also, the width of the metal plate before forming is 240 mm. The hat member has a length of 700 mm, and has a shape that includes a curvature of curvature radius R 1000 mm in the width center of the punch in the horizontal plane. As the metal plate, a cold-rolled steel plate having tensile strength of 780 MPa class and plate thickness of 1.2 mm is used.

### [Comparative Example 1]

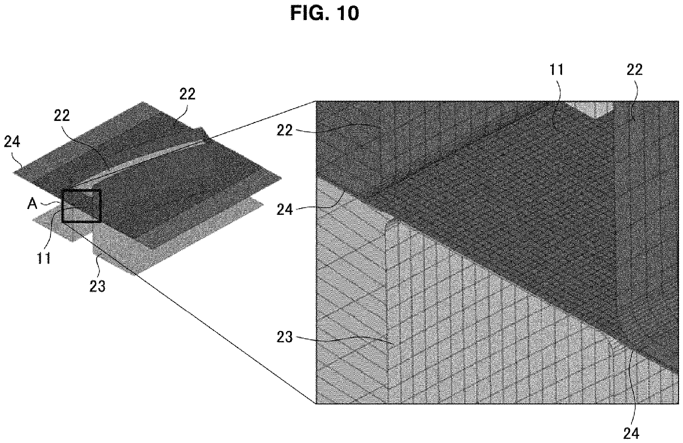

The finite element model of the press forming die illustrated in FIG. 10 is created, as a comparative example 1. A die model 22, a punch model 23, and a blank holder model 24 are modeled as the shell elements of the rigid bodies, and the metal plate model 11 is modeled as the shell element of the elasto-plastic body.

### [Comparative Example 2]

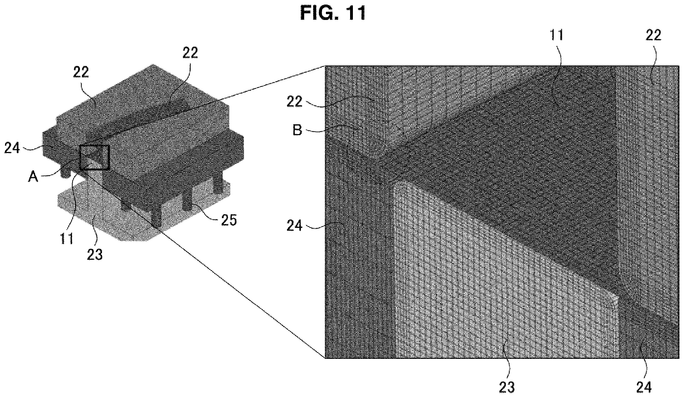

The finite element model of the press forming die illustrated in FIG. 11 is created, as a comparative example 2. The die model 22, the punch model 23, and the blank holder model 24 are modeled as the solid elements of the elastic bodies, and the metal plate model 11 is modeled as the shell element of the elasto-plastic body. Cushion pins 25 are located at the lower side of the blank holder model 24, and the wrinkle suppressing pressure loaded on the metal plate model 11 is loaded by the cushion pins 25 via the blank holder model 24. Note that the cushion pins 25 are modeled as the rigid bodies.

Here, the forming simulation of the drawing forming which uses the general-purpose finite element method analysis software to press-form the finite element model of the metal plate by using the finite element model of the press forming die of the comparative example 2 and obtain the formed piece (the hat member) illustrated in FIG. 1 is performed. The analysis model is set as a 1/2 symmetric model in consideration of symmetry of the formed piece. The cross sections illustrated in the partially enlarged views of the regions A of the above FIGS. 10 and 11 are symmetry planes.

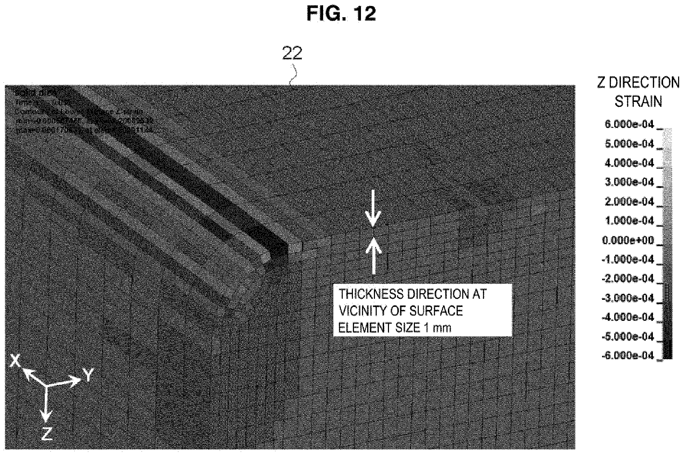

FIG. 12 illustrates strain distribution in the height direction (Z direction) of the die surface in the forming simulation. FIG. 12 corresponds to the rounded portion (the dashed line portion B of FIG. 11) of the die model 22 illustrated in FIG. 11, and is a diagram that reverses top, bottom, left, and right of FIG. 11. FIG. 12 revealed that strain is generated to approximately 2 mm thickness from the surface of the die at the time of forming the metal plate. It was confirmed that when only the surface vicinity of the forming tool that contacts the metal plate is modeled as the elastic body or the elasto-plastic body, the forming simulation that considers the elastic deformation of the forming tool can be performed.

### [Working Example 1]

As working example 1, the finite element model of the press forming die is created by setting the surface layer as the elastic body shell element, and the base body as the rigid body shell element. The finite element model of the working example 1 is illustrated in FIG. 13. In the working example 1, the finite element model of the press forming die is built by setting the surface layer 12a of the die model 12, the surface layer 13a of the punch model 13, and the surface layer 14a of the blank holder model 14 as the shell elements of the elastic bodies, and the base body 12b of the die model 12, the base body 13b of the punch model 13, and the base body 14b of the blank holder model 14 as the shell elements of the rigid bodies, and the metal plate model 11 as the shell element of the elasto-plastic body, as illustrated in FIG. 13. In this finite element model, the thicknesses of the surface layers are set to 2 mm, and the shell elements are located at the centers of the thicknesses. The shell element of the base body is located to contact the surface of the opposite side to the surface that contacts the metal plate of the surface layer. The rigid body constraint condition is set between the surface layer 12a and the base body 12b, between the surface layer 13a and the base body 13b, and between the surface layer 14a and the base body 14b. Also, the imaginary thickness of the shell element of the surface layer is set to 2 mm, and the imaginary thickness of the shell element of the base body is set to 0 mm, as described above.

### [Working Example 2]

As working example 2, the finite element model of the press forming die is created by setting the surface layer as the elastic body thick-walled shell element, and the base body as the rigid body shell element. The finite element model of the working example 2 is illustrated in FIG. 14. In the working example 2, the finite element model of the press forming die is built by setting the surface layer 12a of the die model 12, the surface layer 13a of the punch model 13, and the surface layer 14a of the blank holder model 14 as the thick-walled shell elements of the elastic bodies, and the base body 12b of the die model 12, the base body 13b of the punch model 13, and the base body 14b of the blank holder model 14 as the shell elements of the rigid bodies, and the metal plate model 11 as the shell element of the elasto-plastic body, as illustrated in FIG. 14. Note that, in FIG. 14, the base body 14b of the blank holder model 14 is hidden by the surface layer 14a and is not depicted on display. In this finite element model, the thickness of the surface layer is set to 2 mm, and the shell element of the base body is located to contact the surface of the opposite side to the surface that contacts the metal plate of the surface layer. The rigid body constraint condition is set between the surface layer 12a and the base body 12b, between the surface layer 13a and the base body 13b, and between the surface layer 14a and the base body 14b. Also, the imaginary thickness of the shell element of the base body is set to 0 mm, as described above.

### [Working Example 3]

As the working example 3, the finite element model of the press forming die is created by setting the surface layer as the elastic body solid element divided once in the thickness direction, and the base body as the rigid body shell element. The finite element model of the working example 3 is the same on display as the finite element model of the die of the working example 2 illustrated in FIG. 14. In the working example 3, the finite element model of the press forming die is built by setting the surface layer 12a of the die model 12, the surface layer 13a of the punch model 13, and the surface layer 14a of the blank holder model 14 as the solid elements of the elastic bodies, and the base body 12b of the die model 12, the base body 13b of the punch model 13, and the base body 14b of the blank holder model 14 as the shell elements of the rigid bodies, and the metal plate model 11 as the shell element of the elasto-plastic body. In this finite element model, the thickness of the surface layer is set to 2 mm, and the shell element of the base body is located to contact the surface of the opposite side to the surface that contacts the metal plate of the surface layer. The rigid body constraint condition is set between the surface layer 12a and the base body 12b, between the surface layer 13a and the base body 13b, and between the surface layer 14a and the base body 14b. Also, the surface layer is set as the solid element that is divided once in the thickness direction. Also, the imaginary thickness of the shell element of the base body is set to 0 mm, as described above.

### [Working Example 4]

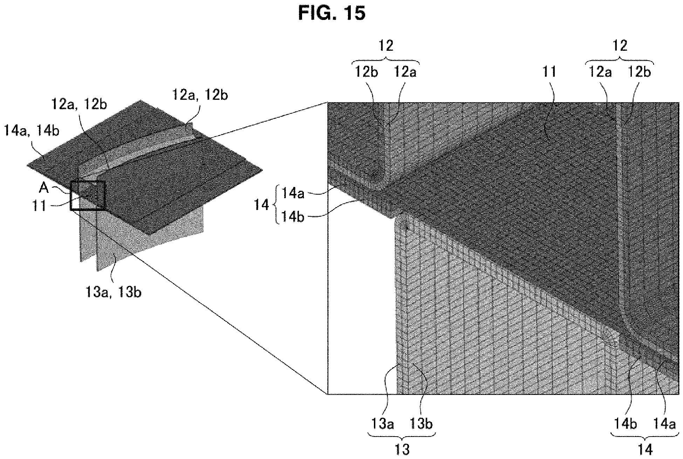

As the working example 4, the finite element model of the press forming die is created by setting the surface layer as the elastic body solid element divided once in the thickness direction, and the base body as the rigid body solid element divided once in the thickness direction. The finite element model of the working example 4 is illustrated in FIG. 15. In the working example 4, the finite element model of the press forming die is built by setting the surface layer 12a of the die model 12, the surface layer 13a of the punch model 13, and the surface layer 14a of the blank holder model 14 as the solid elements of the elastic bodies, and the base body 12b of the die model 12, the base body 13b of the punch model 13, and the base body 14b of the blank holder model 14 as the solid elements of the rigid bodies, and the metal plate model 11 as the shell element of the elasto-plastic body. In this finite element model, the thickness of the surface layer is set to 2 mm, and the solid element of the base body is located to contact the surface of the opposite side to the surface that contacts the metal plate of the surface layer. The rigid body constraint condition is set between the surface layer 12a and the base body 12b, between the surface layer 13a and the base body 13b, and between the surface layer 14a and the base body 14b. Also, the surface layer is set as the solid element that is divided once in the thickness direction. Also, the base body is set as the solid element that is divided once in the thickness direction, and has a thickness of 2 mm.

### [Working Example 5]

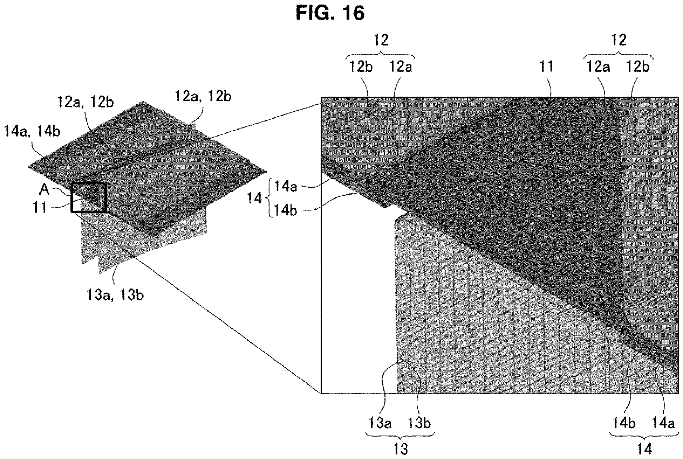

As the working example 5, the finite element model of the press forming die is created by setting the surface layer as the elastic body shell element, and the base body as the rigid body shell element, and integrating the shell elements of the surface layer and the base body by sharing the nodes of the shell elements of the surface layer and the base body. The finite element model of the working example 5 is illustrated in FIG. 16. Note that the surface layer and the base body overlap on the display in FIG. 16, and are not distinguished. In the working example 5, the finite element model of the press forming die is built by setting the surface layer 12a of the die model 12, the surface layer 13a of the punch model 13, and the surface layer 14a of the blank holder model 14 as the shell elements of the elastic bodies, and the base body 12b of the die model 12, the base body 13b of the punch model 13, and the base body 14b of the blank holder model 14 as the shell elements of the rigid bodies, and the metal plate model 11 as the shell element of the elasto-plastic body. The finite element model is created to share the nodes with each other between the surface layer 12a and the base body 12b, between the surface layer 13a and the base body 13b, and between the surface layer 14a and the base body 14b. Note that, in this finite element model, the imaginary surface at one side that contacts the metal plate of the surface layer is the target of the elastic deformation, and thus the imaginary thickness of the surface layer is set to 4 mm which is 2 times that of the working example 1, and the shell element is located at the center of the imaginary thickness. Also, the imaginary thickness of the shell element of the base body is set to 0 mm, as described above.

### [Working Example 6]

As the working example 6, the finite element model of the press forming die is created by setting the surface layer as the elastic body solid element divided once in the thickness direction, and the base body as the rigid body shell element, and sharing the nodes of a part of the solid element of the surface layer and the nodes of the shell element of the base body for integration. The finite element model of the working example 6 is the same on display as the finite element models of the dies of the working example 2 and the working example 3 illustrated in FIG. 14. In the working example 6, the finite element model of the press forming die is built by setting the surface layer 12a of the die model 12, the surface layer 13a of the punch model 13, and the surface layer 14a of the blank holder model 14 as the solid elements of the elastic bodies, and the base body 12b of the die model 12, the base body 13b of the punch model 13, and the base body 14b of the blank holder model 14 as the shell elements of the rigid bodies, and the metal plate model 11 as the shell element of the elasto-plastic body. In this finite element model, the thickness of the surface layer is set to 2 mm, and the shell element of the base body is located to contact the surface of the opposite side to the metal plate contacting surface of the surface layer. The finite element models are each created to share with each other the nodes of the surface that contacts the base body in the solid element of the surface layer and the nodes of the shell element of the base body between the surface layer 12a and the base body 12b, between the surface layer 13a and the base body 13b, and between the surface layer 14a and the base body 14b. Also, the surface layer is set as the solid element that is divided once in the thickness direction. Also, the imaginary thickness of the shell element of the base body is set to 0 mm, as described above.

### [Working Example 7]

As the working example 7, the finite element model of the press forming die is created by setting the surface layer as the elastic body solid element divided once in the thickness direction, and the base body as the rigid body solid element divided once in the thickness direction, and sharing the nodes of a part of the solid element of the surface layer and the nodes of a part of the solid element of the base body for integration. The finite element model of the working example 7 is the same on display as the finite element model of the die of the working example 4 illustrated in FIG. 15. In the working example 7, the finite element model of the press forming die is built by setting the surface layer 12a of the die model 12, the surface layer 13a of the punch model 13, and the surface layer 14a of the blank holder model 14 as the solid elements of the elastic bodies, and the base body 12b of the die model 12, the base body 13b of the punch model 13, and the base body 14b of the blank holder model 14 as the solid elements of the rigid bodies, and the metal plate model 11 as the shell element of the elasto-plastic body. In this finite element model, the thickness of the surface layer is set to 2 mm, and the solid element of the base body is located to contact the surface of the opposite side to the metal plate contacting surface of the surface layer. The finite element models are each created to share the nodes of the surfaces that contact each other, between the surface layer 12a and the base body 12b, between the surface layer 13a and the base body 13b, and between the surface layer 14a and the base body 14b. Also, the surface layer is set as the solid element that is divided once in the thickness direction. Also, the base body is set as the solid element that is divided once in the thickness direction, and has a thickness of 2 mm.

### [Evaluation]

The general-purpose finite element method analysis software is used, and the finite element models of the dies of the comparative examples 1 and 2 and the working examples 1 to 7 are used, in order to perform the forming simulation for press-forming the finite element model of the metal plate and obtaining the formed piece (the hat member) illustrated in FIG. 1. The analysis model is set as a 1/2 symmetric model in consideration of symmetry of the formed piece. The cross sections illustrated in the partially enlarged views of the regions A of the above FIGS. 13 to 16 are symmetry planes.

### (1) Surface Pressure Distribution of Blank Holder in Forming Simulation

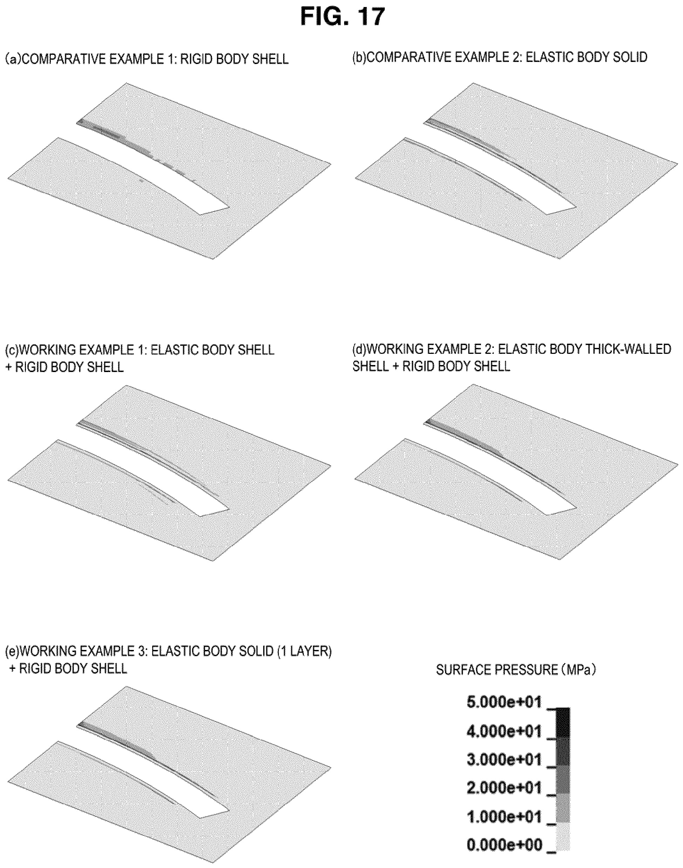

Analysis is performed by the forming simulation, with regard to the surface pressure distribution on the blank holder surface when performing the drawing forming while loading the wrinkle suppressing pressure by the die and the blank holder onto the metal plate. FIG. 17 (a) to (e) illustrate the surface pressure distributions of the blank holder in the forming simulation when using the finite element model of the press forming die of the comparative example 1, the comparative example 2, the working example 1, the working example 2, and the working example 3 respectively. It is confirmed that, in the comparative example 1, the surface pressure concentrates only at the longitudinal direction center portion of the shrink flange side where the increased thickness is large in the formed piece, whereas in the comparative example 2, the working example 1, the working example 2, and the working example 3, the surface pressure is distributed in the longitudinal direction including the stretch flange side. Note that, although not described in FIG. 17, it is confirmed that, in the working examples 4 to 7 as well, the surface pressure is distributed in the longitudinal direction including the stretch flange side, in the same way as the comparative example 2, the working example 1, the working example 2, and the working example 3.

### (2) Springback Analysis

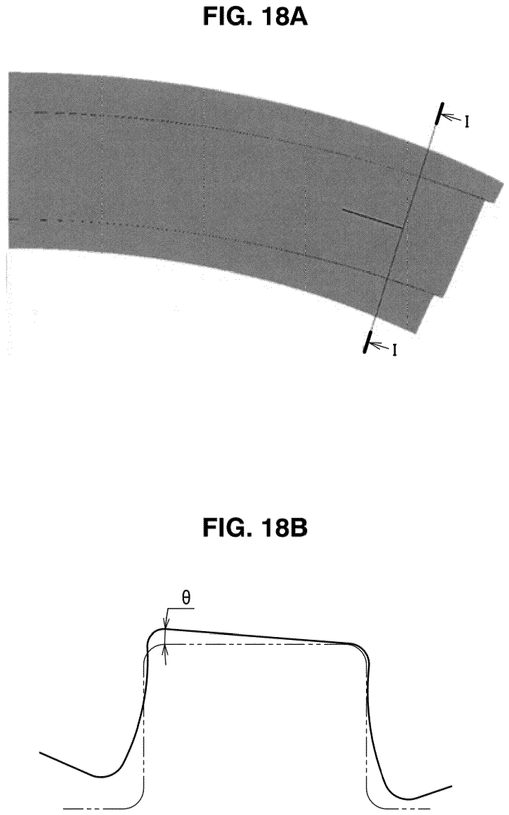

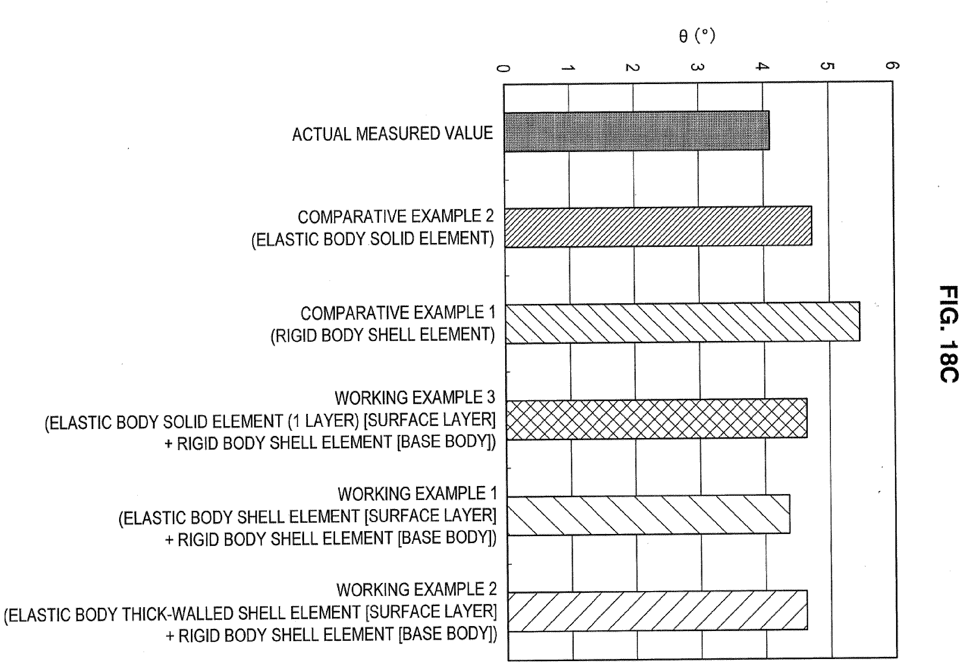

Springback analysis after forming is performed by the forming simulation. A twist angle θ of the top panel surface end portion with reference to the center of the top panel surface of the formed piece illustrated in FIGS. 18A and 18B is calculated. FIG. 18C illustrates the twist angle in the forming simulation and the actual measured value. As illustrated in FIG. 18C, in both of the comparative example 2 that models the forming tool as the elastic body solid element and the working examples 1 to 3 that model the forming tool by the forming simulation method according to the above present embodiment, the twist angle is made smaller than the comparative example 1 that models the forming tool as the rigid body shell element. Also, all of the analysis accuracies of the working examples 1 to 3 indicate a value that is comparable to the comparative example 2 and closer to the actual measured value than the comparative example 1.

Note that, although not described in FIG. 18C, the working example 4 that sets the surface layer as the solid element of the elastic body and the base body as the solid element of the rigid body has the same twist angle as the working example 3 that sets the surface layer as the solid element of the elastic body in the same way. Further, the working example 5 that creates the finite element model integrated by sharing the nodes between the surface layer and the base body and sets the surface layer as the shell element of the elastic body and the base body as the shell element of the rigid body has the same twist angle as the working example 1 that sets the surface layer as the shell element of the elastic body and the base body as the shell element of the rigid body in the same way. Also, the working example 6 in which the surface layer is the solid element and the base body is the shell element has the same twist angle as the working example 3 in which the surface layer is the solid element and the base body is the shell element in the same way, and the working example 7 in which the surface layer is the solid element and the base body is the solid element has the same twist angle as the working example 4 in which the surface layer is the solid element and the base body is the solid element in the same way. That is, all of the analysis accuracies of the working examples 4 to 7 also indicate a value that is comparable to the comparative example 2 and closer to the actual measured value than the comparative example 1.

### (3) Calculation Time

Analysis times in the forming simulation are indicated in table 1 below. In the table 1, the working examples 1 to 4 are the results obtained when modeling the forming tool by setting the rigid body constraint condition between the surface layer and the base body, and the working examples 5 to 7 are the results obtained when modeling the forming tool integrated by sharing the nodes between the surface layer and the base body.

**[Table 1]**

| | finite element model of die | calculation time |
|---|---|---|
| comparative example 1 | rigid body shell element | 1 h 30 min |
| comparative example 2 | elastic body solid element | 23 h 30 min |
| working example 1 | elastic body shell element + rigid body shell element | 7 h 50 min |
| working example 2 | elastic body thick-walled shell element + rigid body shell element | 5 h 40 min |
| working example 3 | elastic body solid element (1 division) + rigid body shell element | 5 h 50 min |
| working example 4 | elastic body solid element (1 division) + rigid body solid element (1 division) | 6 h 25 min |
| working example 5 | elastic body shell element + rigid body shell element [surface layer - base body integrated model] | 5 h 10 min |
| working example 6 | elastic body solid element (1 division) + rigid body shell element [surface layer - base body integrated model] | 4 h 50 min |
| working example 7 | elastic body solid element (1division) + rigid body solid element (1 division) [surface layer - base body integrated model] | 5 h 20 min |

With respect to the analysis time, the comparative example 1 that models the forming tool as the rigid body shell element is the shortest, and the comparative example 2 that models the forming tool as the elastic body solid element is the longest. In contrast, the calculation time is shortened significantly, as compared to the comparative example 2, in the working examples 1 to 3 that model the forming tool by setting the surface layer as one of the elastic body shell element, the elastic body thick-walled shell element, and the elastic body solid element, and the base body as the rigid body shell element, and setting the rigid body constraint condition between the surface layer and the base body, and in the working example 4 that models the forming tool by setting the surface layer as the elastic body solid element, and the base body as the rigid body solid element, and setting the rigid body constraint condition between the surface layer and the base body. Also, the calculation time can be shortened further, as compared to the working examples 1 to 4, in the working examples 5 to 7 that model the forming tool integrated by sharing the nodes between the surface layer and the base body.

### Reference Signs List

- 1: metal plate
- 2: die
- 3: punch
- 4: blank holder
- 10A: forming tool
- 10B: forming tool model
- 11: metal plate model
- 12, 22: die model
- 12a: surface layer of die model
- 12b: base body of die model
- 13, 23: punch model
- 13a: surface layer of punch model
- 13b: base body of punch model
- 14, 24: blank holder model
- 14a: surface layer of blank holder model
- 14b: base body of blank holder model
- 30: formed piece

## Claims

1. A model setting method for setting a finite element model for simulating forming of a metal plate by a forming tool by using a finite element method, by a processor included in a computer, the model setting method comprising:
in setting a forming tool model that represents the forming tool,
setting at least a part of a metal plate contacting surface that contacts the metal plate, in the forming tool model, as a surface layer that has characteristics of an elastic body or an elasto-plastic body; and
setting a part that supports the surface layer in the forming tool model, as a base body that has characteristics of a rigid body.

2. The model setting method according to claim 1, wherein
the surface layer is a shell element, a thick-walled shell element, or a solid element.

3. The model setting method according to claim 1 or 2, wherein
the base body is a shell element.

4. The model setting method according to claim 1 or 2, wherein
the base body is a solid element or a thick-walled shell element.

5. The model setting method according to any one of claims 1 to 4, wherein
the forming tool model expressed by the surface layer and the base body is what a region at a vicinity of a surface of the forming tool is modeled along the metal plate contacting surface.

6. The model setting method according to any one of claims 1 to 5, wherein
a thickness of the surface layer is set to 0.2 to 5.0 times a base material thickness of the metal plate.

7. The model setting method according to any one of claims 1 to 6, wherein
a thickness of the surface layer is 1.0 to 10 mm.

8. The model setting method according to any one of claims 1 to 7, wherein
a part of the forming tool model at which load concentrates on the forming tool when forming the metal plate is set as the surface layer.

9. The model setting method according to any one of claims 1 to 8, wherein
when a plurality of forming tools are modeled, at least one of forming tool models is represented by the finite element model that includes the surface layer and the base body.

10. A forming simulation method for simulating forming of a metal plate by a forming tool by using a finite element method, the forming simulation method comprising:
a metal plate model setting step for setting a metal plate model representing the metal plate;
a forming tool model setting step for setting a forming tool model that represents the forming tool; and
an analysis step for simulating forming of the metal plate by the forming tool, by using the metal plate model and the forming tool model,
wherein the forming tool model setting step includes a first setting step for setting a first forming tool model by using the model setting method according to any one of claims 1 to 9.

11. The forming simulation method according to claim 10, wherein
the forming tool model setting step includes a second setting step for setting a second forming tool model that represents the forming tool as a rigid body shell element,
first forming simulation that performs analysis by using the metal plate model and the second forming tool model is performed,
whether or not the second forming tool model needs to be changed is determined on the basis of an increased thickness amount and a forming load of the metal plate obtained by the first forming simulation, and
when it is determined that the second forming tool model needs to be changed, second forming simulation that performs analysis by using the first forming tool model is performed.

12. A production method of a forming tool for designing and producing the forming tool by using the forming simulation method according to claim 10 or 11.

13. A program for causing a computer to execute a process that sets a finite element model for simulating forming of a metal plate by a forming tool by using a finite element method, comprising:
in setting a forming tool model that represents the forming tool,
setting at least a part of a metal plate contacting surface that contacts the metal plate, in the forming tool model, as a surface layer that has characteristics of an elastic body or an elasto-plastic body; and
setting a part that supports the surface layer in the forming tool model, as a base body that has characteristics of a rigid body.

14. A computer-readable recording medium having a program recorded thereon, the program being for causing a computer to execute a process for setting a finite element model for simulating forming of a metal plate by a forming tool by using a finite element method, comprising:
in setting a forming tool model that represents the forming tool,
setting at least a part of a metal plate contacting surface that contacts the metal plate, in the forming tool model, as a surface layer that has characteristics of an elastic body or an elasto-plastic body; and
setting a part that supports the surface layer in the forming tool model, as a base body that has characteristics of a rigid body.

15. A finite element model of a forming tool used in simulation of forming a metal plate by the forming tool, wherein
at least a part of a surface layer of a metal plate contacting surface of the forming tool is expressed by an elastic body or an elasto-plastic body, and a base body that supports the surface layer is expressed by a rigid body.

16. The finite element model according to claim 15, wherein
the finite element model of the forming tool expressed by the surface layer and the base body is what a region at a vicinity of a surface of the forming tool is modeled along the metal plate contacting surface.

17. The finite element model according to claim 15 or 16, wherein
the surface layer expressed by the elastic body or the elasto-plastic body is a shell element, a thick-walled shell element, or a solid element.

18. The finite element model according to any one of claims 15 to 17, wherein the base body expressed by the rigid body is a shell element.

19. The finite element model according to any one of claims 15 to 17, wherein the base body expressed by the rigid body is a solid element or a thick-walled shell element.

20. The finite element model according to any one of claims 15 to 19, wherein at least a part of the surface layer includes at least a part of a blank holder of the forming tool.

21. The finite element model according to any one of claims 15 to 19, wherein at least a part of the surface layer includes a convex shape portion of the forming tool.

22. The finite element model according to any one of claims 15 to 19, wherein at least a part of the surface layer includes a region of the forming tool corresponding to a curved surface of a formed piece, in the finite element model of the forming tool for forming the formed piece that includes the curved surface from the metal plate.

23. The finite element model according to any one of claims 15 to 22, wherein a thickness of the surface layer is 1.0 to 10 mm.
